# EUROPEAN PATENT APPLICATION

(11) **EP 4 559 966 A1**
(43) Date of publication of application: **28.05.2025**
(21) Application number: 24213497.1
(22) Date of filing: 18.11.2024
(51) Int. Cl.: C08L 9/06, C08L 9/00, C08K 3/36, C08K 5/548, C08L 61/06, B60C 1/00, C08L 15/00, C08L 45/00, C08L 91/06

(54) **TREAD COMPOSITION FOR ALL-SEASON TIRE**

(30) Priority: 21.11.2023 US 202318516301
(71) Applicant: The Goodyear Tire & Rubber Company, Akron, OH 44316 (US)
(72) Inventor: JACOBY, Claude Charles, L-6615 Wasserbillig (LU); MOUGEL, Celia Pauline Elodie, Berg-sur-Moselle (FR); KAES, Christian, L-9184 Schrondweiler (LU); MILAN, Marie-Laure Stéphanie, L-2215 Luxembourg (LU); DELVILLE, Jerome, F54430 Rehon (FR); STEINER, Pascal Patrick, L-9189 Vichten (LU); WEYDERT, Marc, L-8064 Bertrange (LU)
(74) Representative: Kutsch, Bernd

(57) **Abstract**

A vulcanizable rubber composition for use in a tire component such as a tire tread is disclosed. The rubber composition comprises: 80 to 100 parts per hundred rubber (phr) of a polydiene component comprising 60 to 100 phr of a solution-polymerized styrene butadiene rubber with a styrene content of 2 to 10 wt.% and a Tg of -95°C to -75°C, and 0 to 40 phr of a polybutadiene rubber; at least 100 phr of silica filler; at least 6 parts by weight per hundred parts of the silica filler (phf) of a blocked mercapto organosilane coupling agent; at least 40 phr of a hydrocarbon resin; at least of 5 phr of a substituted or unsubstituted phenol aldehyde resin; and a cure package.

## Description

### FIELD

Described herein is a rubber composition, a method of forming a rubber composition, and a component of a pneumatic tire, such as a tire tread, formed from the composition. The rubber composition is able to yield improvements in wet and rolling resistance indicators while maintaining or improving snow performance indicators.

### BACKGROUND

For all-season and winter tires, it is desirable to have good wet skid resistance, low rolling resistance, and good performance in snow. It has traditionally been very difficult to maintain snow performance without sacrificing its wet skid resistance and rolling resistance characteristics. These properties depend, to a great extent, on the dynamic viscoelastic properties of the rubber composition utilized in making the tire.

In order to reduce the rolling resistance, elastomers having a high rebound have often been utilized in making tire tread rubber compounds. On the other hand, in order to increase the wet skid resistance of a tire, elastomers which undergo a large energy loss have been utilized in the tire's tread. In order to balance these two viscoelastically inconsistent properties, mixtures of various types of synthetic and/or natural rubber are normally utilized in tire treads.

For year-round use, tires with treads for promoting traction on snowy and icy surfaces as well as wet traction on wet roads are desirable.

Vulcanized rubber compositions have been developed for tire treads which include solution polymerized styrene-butadiene rubber (SSBR) in combination with a polybutadiene rubber (PBD), silica, and other additives, in selected proportions. For example, U.S. Pub. No. 20200283602 A1 describes a pneumatic tire tread including a vulcanizable rubber composition including a specific SSBR and a relatively high-cis PBD, silica, and a resin selected from C5/C9 resins and DCPD/C9 resins. U.S. Pub. No. 20170145195 A1 describes a pneumatic tire tread including a vulcanizable rubber composition including an SSBR, PBD, one or more hydrocarbon resins, and silica, in specific weight ratios. U.S. Pub. No. 20100186869 A1 describes a vulcanizable rubber composition including an SSBR functionalized with an alkoxysilane group and at least one functional group selected from primary amines and thiols, a relatively high-cis PBD, and silica.

Such rubber compositions often tend to prioritize wet traction over snow performance or vice versa. There remains a need for a rubber composition for use in a tire tread which provides improved wet performance while maintaining performance in snow and providing a low rolling resistance.

### SUMMARY OF THE INVENTION

The invention relates to a rubber composition in accordance with claim 1, to a tire component in accordance with claim 13, to a tire in accordance with claim 14 and to a method in accordance with claim 15.

Dependent claims refer to preferred embodiments of the invention.

In accordance with a preferred embodiment, a vulcanizable rubber composition includes 80 to 100 parts per hundred rubber (phr) of a polydiene component comprising 60 to 100 phr of a solution-polymerized styrene butadiene rubber with a styrene content of 2 to10 wt.% and a Tg of -95°C to -75°C, and 0 to 40 phr of a polybutadiene rubber. The rubber composition further includes at least 100 phr of silica filler; at least 6 parts by weight per hundred parts of the silica filler (phf) of a blocked mercapto organosilane coupling agent; at least 40 phr of a hydrocarbon traction resin; at least of 5 phr of a substituted or unsubstituted phenol aldehyde resin; and a cure package including: a sulfur-based curing agent, zinc oxide, and a cure accelerator.

In various preferred aspects of this embodiment, singly or combined:
The solution-polymerized styrene butadiene rubber is present at 70 to 90 phr.
The polybutadiene rubber is present at 10 to 30 phr.

A ratio by weight of the solution-polymerized styrene butadiene rubber to the polybutadiene rubber is from 2.5:1 to 5:1.

The solution-polymerized styrene butadiene rubber has a styrene content of no more than 8 wt.%.

The solution-polymerized styrene butadiene rubber is functionalized with an aminosilane, such as an alkoxyaminosilane.

The silica filler is at least 140 phr.

The blocked mercapto organosilane coupling agent includes 3-octoanoylthio-1-propyltriethoxysilane.

The blocked mercapto organosilane coupling agent is at least 10 phr and/or up to 18 phr, or up to 15 phr.

Coupling agents other than the blocked mercapto organosilane coupling agent total no more than 2 phr.

The hydrocarbon traction resin is at least 50 phr and/or up to 80 phr, or up to 70 phr.

The hydrocarbon traction resin includes a hydrogenated dicyclopentadiene/C9 resin.

The substituted or unsubstituted phenol aldehyde resin is present in an amount of at least 8 phr and/or up to 12 phr.

The substituted or unsubstituted phenol aldehyde resin includes an alkylphenol formaldehyde resin.

The vulcanizable rubber composition further includes at least one of a liquid plasticizer and a wax.

The vulcanizable rubber composition includes no more than 5 phr, or no more than 2 phr of carbon black.

A tire tread is formed from the rubber composition in any of the aspects described above. A tire, preferably a pneumatic tire, may include the tread.

In accordance with another preferred embodiment, a method of forming a tire tread includes mixing together 80 to 100 parts per hundred rubber (phr) of a polydiene component comprising 60 to 100 phr of a solution-polymerized styrene butadiene rubber with a styrene content of 2 to 10 wt.% and a Tg of -95°C to-75°C, and 0 to 40 phr of a polybutadiene rubber; at least 100 phr of silica; at least 6 parts by weight per hundred parts of the silica (phf) of a blocked mercapto organosilane coupling agent; at least 40 phr of a hydrocarbon traction resin; at least of 5 phr of a substituted or unsubstituted phenol aldehyde resin; and a cure package including a sulfur-based curing agent, zinc oxide, and a cure accelerator to form a vulcanizable rubber composition. The method further includes curing the vulcanizable rubber composition to form the tire tread.

In accordance with another preferred embodiment, a vulcanizable rubber composition includes 70 to 85 phr of a solution-polymerized styrene butadiene rubber with a styrene content of 2 to10 wt.% and a cis-1,4-butadiene content of less than 45; 15 to 30 phr of a polybutadiene rubber; 140 to 170 phr of silica filler; 8 to 15 phr of a blocked mercapto organosilane coupling agent; 50 to 70 phr of a hydrocarbon traction resin; 8 to 12 phr of a substituted or unsubstituted phenol aldehyde resin; and a cure package including a sulfur-based curing agent, zinc oxide, and a cure accelerator.

### DETAILED DESCRIPTION OF PREFERRED EMBODIMENTS OF THE INVENTION

A rubber composition is described which is suited to forming an all-season or winter tire tread. The rubber composition includes an elastomer component including a relatively low Tg functionalized elastomer, silica filler, a blocked mercapto organosilane coupling agent, a traction resin, and a substituted or unsubstituted phenol aldehyde tackifying resin. This combination is found to improve the balance of wet performance, rolling resistance, and snow performance indicators in a tire tread.

### DEFINITIONS

As used herein, the terms "rubber" and "elastomer" may be used interchangeably unless otherwise indicated. The terms "cure" and "vulcanize" may be used interchangeably unless otherwise indicated.

The term "tread," refers to both the region of a tire that comes into contact with the road under normal inflation and load as well as any subtread.

The term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. The term "phf" means parts per one hundred parts by weight of silica in the rubber composition.

Molecular weights of elastomers, rubber compositions, and resins, such as Mₙ (number average molecular weight), M_{w} (weight average molecular weight) and M_{z} (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition.

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

The glass transition temperature Tg for a resin is determined as a peak midpoint by a differential scanning calorimeter (DSC) at a temperature rate of increase of 10° C per minute, according to ASTM D6604-00 (2017), "Standard Practice for Glass Transition Temperatures of Hydrocarbon Resins by Differential Scanning Calorimetry."

The glass transition temperature Tg for an oil is determined as a peak midpoint by a differential scanning calorimeter (DSC) at a temperature rate of increase of 10°C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring-and-Ball Apparatus," which is sometimes referred to as a ring and ball softening point.

Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

Cis, trans, and vinyl contents (%) of polymers refer to the molar proportions of the 1,4-cis, 1-4-trans, and 1-2-vinyl butadiene units of the polymer, unless otherwise expressed. These percentages can be determined by solid-state NMR.

Styrene content refers to the wt.% of bound styrene in a polymer, such as a styrene-butadiene polymer, and can be determined by FT-IR.

### A. The vulcanizable rubber composition

In one embodiment, a vulcanizable rubber composition, which is suited to forming a tire tread, includes:
a) 80 - 100 parts per hundred rubber, by weight (phr) of a polydiene component comprising:
   i) 60 - 100 phr of a solution-polymerized styrene butadiene rubber (SSBR) with a styrene content of 2- 10 wt.% and a Tg of -95°C to -75°C, and
   ii) 0 - 40 phr of polybutadiene rubber (PBD);
b) 0 - 20 phr of one or more elastomers other than a) and b);
c) at least 100 phr of silica filler;
d) one or more coupling agents, including at least 6 parts by weight per hundred parts of the silica (phf) of a blocked mercapto organosilane coupling agent;
e) a resin component comprising:
   i) at least 40 phr of a hydrocarbon traction resin, such as a hydrogenated dicyclopentadiene (HDCPD)/C9 resin,
   ii) at least of 5 phr a substituted or unsubstituted phenol aldehyde tackifier resin, such as a phenol formaldehyde resin;
f) 0-15 phr of a liquid plasticizer, such as a processing oil, e.g., a vegetable oil;
g) 0 - 3 phr of a wax; and
h) a cure package including:
   i) a sulfur-based curing agent,
   ii) zinc oxide, and
   iii) a cure accelerator.

The cure package may further include iv) one or more organic activators, such as fatty acids, alkaline earth metal salts of fatty acids, and combinations thereof; and v) a cure retardant.

The rubber composition optionally includes additional rubber compounding materials, such as antioxidants, antiozonants, antidegradants, and the like.

When used to form a tire tread of a pneumatic tire, the rubber composition provides an improved combination of wet traction performance, rolling resistance, and snow performance, as determined by various indicators for these characteristics. Wet traction is a tire's ability to stop on wet pavement. Rolling resistance is the energy that a vehicle needs to send to the tires to maintain movement at a consistent speed over a surface and thus impacts the fuel efficiency of the vehicle. Snow performance relates to the tire's ability to stop on snow and icy pavement.

Exemplary components of the rubber composition are now described.

### a) The Polydiene Elastomers

The rubber composition includes one or more polydiene elastomers, each of the polydiene elastomers being derived, at least in part, from butadiene. In one embodiment the polydiene elastomers include a solution polymerized styrene/butadiene rubber (SSBR) and a polybutadiene rubber (PBD). A ratio by weight of SSBR to PBD may be at least 2.5:1, or at least 3:1, or at least 4:1, or up to 9:1, or up to 6:1, or up to 5:1.

In one embodiment, the polydiene component has a relatively low cis content. This may be achieved by combining a solution-polymerized styrene-butadiene rubber with a styrene content of 2-10 wt.%, a cis content of no more than 50%, and a Tg of - 95°C to -75°C, with a polybutadiene rubber, which may have a higher cis content than the solution-polymerized styrene-butadiene rubber, but which is present in a smaller amount.

### i) The Solution Polymerized Styrene-Butadiene Rubber (SSBR)

The solution-polymerized styrene butadiene rubber (SSBR) (exclusive of any extender oil) may be present in the rubber composition at 60 - 100 phr, or at least 70 phr, or at least 72 phr, or up to 95 phr, or up to 90 phr, or up to 85 phr, or up to 80 phr, e.g., 75±2 phr.

The exemplary SSBR may have a relatively low styrene content. The styrene content of the SSBR may be at least 2 wt.%, or at least 3 wt.%, or at least 4 wt.%, or up to 10 wt.%, or up to 8 wt.%, or up to 6 wt.%, e.g., 5±1 wt.%.

The exemplary SSBR may have a medium vinyl microstructure. The vinyl content of the SSBR may be at least 8%, or at least 10%, or up to 14%, or up to 12%, such as 11±2%; the cis-1,4-butadiene content of the SSBR may be less than 60%, or less than 50%, or less than 45%, or less than 40%, or at least 20%, or at least 30%, such as 40±5%; and the balance may be trans-1,4 to make up 100% of the butadiene content of the polymer.

The Tg of the SSBR may range from -95°C to -75°C, such as at least -90°C, or up to -80°C, e.g., -85±3°C.

The Mooney viscosity (ML1+4 at 100°C) of the SSBR may be from 80 to 100, such as 90±5.

The SSBR may have an Mw of at least 550, or at least 600, or up to 700, or up to 650. The SSBR may have an Mn of at least 300, or up to 375, or up to 350.

The SSBR may be functionalized with various functional groups, or the SSBR may be non-functionalized. The SSBR may be obtained by copolymerizing styrene and butadiene with an aminosilane and/or other functional group, which generates a functional group or groups which are bonded to the polymer chain. Other functional groups which may be used include thiol groups, hydroxyl groups, ethoxy groups, epoxy groups, amino groups, carboxyl groups, phthalocyanine groups, silane-sulfide groups, and mixtures thereof. In one embodiment, the SSBR may be partially hydrogenated to reduce the number of double bonds in the butadiene-derived units of the polymer.

Suitable SSBRs can be formed by polymerization of styrene and 1,3-butadiene monomers and monomers for functionalization of the polymer. The SSBR can be prepared, for example, by anionic polymerization in an inert organic solvent. For example, the SSBR can be synthesized by copolymerizing styrene and 1,3-butadiene monomer in a hydrocarbon solvent utilizing an organic alkali metal and/or an organic alkali earth metal as an initiator, such as an organo lithium compound. Alternatively, the SSBR may be tin-coupled. The functional group(s) may be bonded to any of a polymerization initiating terminal, a polymerization terminating terminal, a main chain of the styrene-butadiene rubber and a side chain, as long as they are bonded to the styrene-butadiene rubber chain. Other methods of preparing SSBRs are described, for example, in U.S. Pat. Nos. 7,137,423 B2, 7,342,070 B2, 8,312,905 B2, and U.S. Pub. Nos. 20080287601 A1 and 20140135437 A1.

In one embodiment, the SSBR is functionalized with an aminosilane group, such as an aminosiloxane group, which may be sulfur-free. In one embodiment, the aminosiloxane compound used for functionalization is of Formula 1: 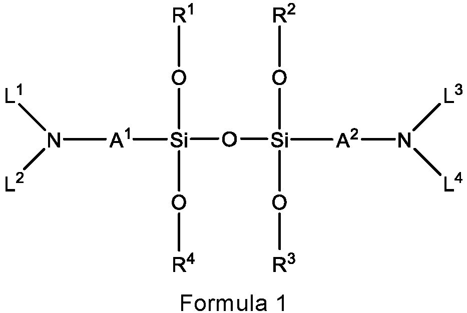 where A¹ and A² are each independently a substituted or unsubstituted divalent hydrocarbon group of 1 to 20 carbon atoms, such as an alkylene group, a cycloalkylene group, an alkenyl group, or an arylene group, e.g., an alkylene group of 1 to 6 carbon atoms, such as methylene, ethylene, or propylene, R¹ to R⁴ are each independently H or a substituted or unsubstituted monovalent hydrocarbon group of 1 to 20 carbon atoms, such as a substituted or unsubstituted alkyl group of 1 to 10 carbon atoms, or of 1 to 6 carbon atoms, a cycloalkyl group of 3 to 10 carbon atoms, an aryl group of 6 to 12 carbon atoms, an alkylaryl group of 7 to 12 carbon atoms, an arylalkyl group of 7 to 12 carbon atoms, where the substituent(s), where present, may be an alkyl and/or halo (e.g., chloro) group, and L¹ to L⁴ are each independently H or a substituted or unsubstituted monovalent hydrocarbon group of 1 to 20 carbon atoms, such as an alkyl group, a cycloalkyl group, an alkenyl group, an aryl group, or an alkylaryl group, e.g., an alkyl group of 1 to 6 carbon atoms.

In one embodiment, in the aminosilane compound of Formula 1, A¹ and A² are each independently an alkylene group of 1 to 3 carbon atoms, R¹ to R⁴ are each independently an alkyl group of 1 to 6 carbon atoms, and L¹ to L⁴ are each independently an alkyl group of 1 to 6 carbon atoms.

Such aminosilanes are described, for example, in U.S. Pat. No. 10,533,062 B2.

Other aminosilanes which can be used for functionalization may be of the general 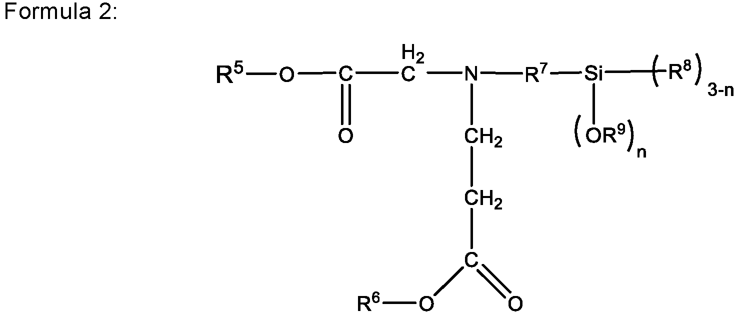 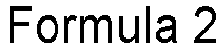 where R⁵ and R⁶ are each a C1-C20, or C1-C6, or C1-C3 hydrocarbon group or a C1-C20, or C1-C6, or C1-C3 hydrocarbon group containing a heteroatom, R⁷ is a C1-C10, or C1-C6 hydrocarbon group, R⁸ and R⁹ are each a C1-C20, or C1-C6, or C1-C3 hydrocarbon group, and n is an integer of 1 to 3.

Such aminosilanes are described, for example, in U.S. Pat. No. 9,951,150 B2.

Other aminosilanes which can be used for functionalization may be of the general 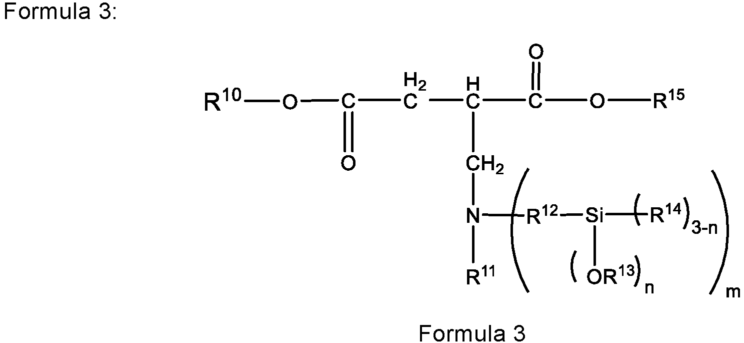 where R¹⁰ and R¹⁵ are each a C1-C20 or C1-C6 hydrocarbon group, or a C1-C20, or C1-C6 hydrocarbon group containing a heteroatom, R¹² is a C1-C10, or C1-C6 hydrocarbon group, R¹³ and R¹⁴ are each a C1-C20, or C1-C6 hydrocarbon group, R¹¹ is a C1-C10 hydrocarbon group when m is 1, and wherein R¹¹ is absent when m is 2, n is an integer of 1 to 3 and m is an integer of 1 or 2.

For example, OR¹³ may be ethoxy, R¹⁰, R¹⁴ and R¹⁵ may be CH₃, m may be 2 and R¹¹ absent, and n may be 2.

Such aminosilanes are described, for example, in U.S. Pat. No. 9,822,192 B2.

Other examples of aminosilane compounds which can be used for functionalization include mono-, bis-, tris-, and tetra- (alkylamino)alkenylmethylsilanes, - (alkenylamino)alkenylmethylsilanes, -(alkylamino)halomethylsilanes, - (alkenylamino)halomethylsilanes, -(arylamino)alkenylmethylsilanes, - (arylamino)halomethylsilanes, and combinations thereof.

The content of the aminosilane group bonded to the polymer chain of the SSBR may be 0.5 - 200 mmol/kg of the styrene-butadiene rubber, or from 1 to 100 mmol/kg, or from 2 to 50 mmol/kg of the styrene-butadiene rubber.

The SSBR may be extended with an extender oil for ease of processing.

Suitable relatively low-styrene, styrene-butadiene rubbers that are multi-functionalized with aminosilane groups are available commercially, such as M0511 ^{™} from LG Chemicals.

### ii) Polybutadiene Rubber (PBD)

The rubber composition includes 0 - 40 phr of polybutadiene rubber (PBD). The PBD may be at least 5 phr in the rubber composition, or at least 10 phr, or at least 15 phr, or at least 20 phr, or up to 35 phr, or up to 30 phr, or 22 ± 5 phr. The polybutadiene rubber may be a synthetic polybutadiene which is the homopolymerization product of a single monomer: butadiene. In one embodiment, a cis-1,4-polybutadiene rubber is used, i.e., a polybutadiene rubber in which cis-1,4-butadiene predominates.

Suitable polybutadiene rubbers may be prepared, for example, by organic solution polymerization of 1,3-butadiene. The PBD may be conveniently characterized, for example, by having at least a 90 wt.% cis-1,4 butadiene content ("high cis" content), or at least a 95 wt.%, or at least a 96 wt.% cis-1,4 butadiene content. Polybutadiene rubbers with lower cis contents are also contemplated.

The glass transition temperature (Tg) of the PBD, determined according to ASTM D3418, may range from-112 to -95 °C, or -110 to -100 °C, such as -106 ± 3 °C. The PBD may have a Mooney viscosity, determined according to ASTM D1646, of 45-65 M.U., such as 55 ± 5.

Suitable polybutadiene rubbers are available commercially, such as Budene^{®} 1223, Budene^{®} 1207, Budene^{®} 1208, and Budene^{®} 1280 from The Goodyear Tire & Rubber Company. These relatively high cis-1,4-polybutadiene rubbers can be synthesized utilizing nickel or neodymium catalyst systems, such as those which include a mixture of (1) an organonickel compound, (2) an organoaluminum compound, and (3) a fluorine containing compound, as described, for example, in U.S. Pat. Nos. 5,698,643 and 5,451,646. For example, Budene^{®} 1223 is a solution polymerized, relatively high cis 1,4-polybutadiene stabilized with a non-staining antioxidant. This polymer is produced using a stereospecific neodymium catalyst which controls molecular weight distribution and provides a highly linear polymer weight distribution and provides a highly linear polymer. Budene^{®} 1223 has a Mooney viscosity (ML1+4 @ 100°C) of 55, a Tg of -106°C, an onset Tg, of -110°C, a cis-1,4 butadiene content of 96-97 wt.%, a maximum of 0.5 wt.% volatiles, and a specific gravity of 0.91.

In one embodiment, the PBD may be hydrogenated and/or functionalized. The functionalization, if used, may be selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer, as described above for the SSBR.

### b) Other Elastomers

The rubber composition may include 0 to 20 phr, or up to 10 phr, or up to 5 phr, or up to 2 phr, or up to 1 phr, of one or more elastomers other than those described for a) above.

Such other vulcanizable elastomer(s) may be selected from natural rubber, synthetic polyisoprene, halobutyl rubber, e.g., bromobutyl rubber and chlorobutyl rubber, nitrile rubber, liquid rubbers, polynorbornene copolymer, isoprene-isobutylene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadienestyrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymers, co-polyester block copolymers, polyurethane block copolymers, polyamide block copolymers, thermoplastic polyolefins, thermoplastic vulcanizates, ethylene vinyl acetate copolymers, ethylene n-butyl acrylate copolymers, ethylene methyl acrylate copolymers, neoprene, acrylics, polyurethanes, polyacrylates and methacrylates, ethylene acrylic acid copolymers, polyether ether ketones, polyamides, atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally includes a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

In one embodiment, the rubber composition includes no more than 10 phr, or no more than 5 phr, or no more than 2 phr of polyisoprene elastomers (natural rubber and synthetic polyisoprene).

In one embodiment, PBD and SSBR are the only elastomers in the rubber composition or together may account for at least 95 phr or at least 98 phr of the elastomers.

### c) Silica and Other Particulate Fillers

The rubber composition includes at least 100 phr, or at least 120 phr, or at least 130 phr, or at least 140 phr, or at least 150 phr, or up to 200 phr, or up to 180 phr, or up to 170 phr of silica filler, such as 150 ± 10 phr or 155 ± 10 phr.

Expressed in terms of the total amount of particulate filler, silica may be present in the rubber composition in an amount of at least 90 phf, or at least 95 phf, or up to 100 phf, or up to 98 phf.

The term "silica" is used herein to refer to silicon dioxide, SiOz (which may contain minor amounts of impurities, generally less than 1 wt.%, resulting from the process in which the silica is formed). The silica may be a precipitated silica which is formed by digesting amorphous silica with sodium hydroxide to form sodium silicate and precipitating silica from sodium silicate by reaction with an acidifying agent, such as sulfuric acid or carbon dioxide. The resulting precipitate is washed and filtered. Other methods of preparing particulate silica are described, for example, in U.S. Pat. Nos. 5,587,416 A, 5,708,069 A, 5,789,514 A, 5,800,608 A, 5,882,617 A, and 9,359,215 B2, and U.S. Pub. Nos. 20020081247 A1 and 20050032965 A1.

The surface area of silica can be measured by nitrogen adsorption in accordance with ASTM D1993-18, "Standard Test Method for Precipitated Silica-Surface Area by Multipoint BET Nitrogen Adsorption," which is referred to herein as nitrogen surface area. The nitrogen surface area of the silica can be at least 100 m²/g, or at least 110 m²/g, or at least 120 m²/g, or up to 400 m²/g, or up to 300 m²/g, or up to 240 m²/g.

The surface area of silica can also be measured by the CTAB surface area, according to ASTM D6845-20, "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammonium bromide, commonly referred to as CTAB) molecules. The CTAB surface area tends to be slightly lower than the nitrogen surface area. The silica may have a CTAB specific surface area of at least 90 m²/g, or at least 100 m²/g, or up to 350 m²/g, or up to 300 m²/g, or up to 230 m²/g.

Exemplary precipitated silicas which may be used include Hi-Sil^{™} 315 G-D, Hi-Sil^{™} 532, Hi-Sil^{™} 532 EP, and Hi-SiI^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

Other particulate fillers may also be used in the rubber composition, such as one or more of carbon black, alumina, aluminum hydroxide, clay (reinforcing grades), magnesium hydroxide, boron nitride, aluminum nitride, titanium dioxide, and combinations thereof. Such other particulate fillers, where used may be present in a total amount of 1 to 30 phr, or up to 20 phr, or up to 10 phr, or up to 5 phr.

The carbon black, where used, may be present at up to 10 phr, or up to 5 phr, or at least 0.5 phr, and may have a specific surface area of at least 8, or at least 20, or at least 100, or at least 120, or up to 132 m²/kg, as determined according to ASTM D6556-21, "Standard Test Method for Carbon Black-Total and External Surface Area by Nitrogen Adsorption." The specific (external) surface area, which is based on the statistical thickness method (STSA), is defined as the specific surface area that is accessible to rubber. In one embodiment, no carbon black is present, except for that used in small amounts (e.g., less than 5 phr) as a carrier for one or more coupling agents.

Exemplary carbon blacks useful herein include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions, as determined according to ASTM D1510-21, ranging from 9 to 145 g/kg and a DBP absorption number, as determined according to ASTM D2414, ranging from 34 to 150 cm³/100 g. For example, N234 grade is a granular carbon black with an Iodine Absorption of about 120 g/kg, a CATB specific surface area of about 119 m²/kg, and a DBP absorption of about 125 m²/kg. N121 grade is a granular carbon black with an Iodine Absorption of about 121 g/kg, a CATB specific surface area of about 121 m²/kg, a DBP absorption of about 132 m²/kg, and an ash content of less than 0.5 wt.%. N220 grade is a granular carbon black with an Iodine Absorption of 116-126 g/kg, a CATB specific surface area of 106-116 m²/kg, a DBP absorption of 109-119 m²/kg, and an ash content of less than 0.5 wt.%.

### d) Organosilane coupling agent

The rubber composition includes one or more organosilane coupling agents, including a blocked mercapto organosilane coupling agent and optionally one or more other sulfur-containing organosilane coupling agents. The organosilane coupling agent assists in dispersing the silica and in bonding the silica to the elastomers.

In one embodiment, a ratio by weight of the blocked mercapto organosilane coupling agent to all organosilane coupling agents is at least 0.7:1, or at least 0.8:1, or at least 0.9:1, or up to 1:1, or up to 0.95:1.

The blocked mercapto organosilane coupling agent is present in an amount of at least 6 parts by weight per hundred parts of the silica (phf), or at least 7 phf, or at least 8 phf, or up to 12 phf, or up to 10 phf. Where the silica is present at 150 to 160 phr, the blocked mercapto organosilane coupling agent may be present at 9 to 18 phr, or 10 to 15 phr, for example.

Exemplary blocked mercapto silanes include alkoxysilylalkylthio and alkylalkoxysilylalkylthio -acetates, -phosphonates, -phosphinates, -sulfates, -sulfonates, -alkanoates, -palmitates, and -benzoates, and mixtures thereof. Examples of such blocked mercapto silanes include 3-octanoylthio-1-propyltriethoxysilane (also known as 3-triethoxysilyl-1-propyl thiooctanoate), 2-triethoxysilyl-1-ethylthioacetate, 2-trimethoxysilyl-1-ethylthioacetate, 2-(methyldimethoxysilyl)-1-ethylthioacetate, 3-trimethoxysilyl-1-propylthioacetate, triethoxysilylmethyl-thioacetate, trimethoxysilylmethylthioacetate, triisopropoxysilylmethylthioacetate, methyldiethoxysilylmethylthioacetate, methyldimethoxysilylmethylthioacetate, methyldi-isopropoxysilylmethylthioacetate, dimethylethoxysilylmethylthioacetate, dimethyl-methoxysilylmethylthioacetate, 1-(2-triethoxysilyl-1-ethyl)-4-thioacetylcyclohexane, 8-trimethoxysilyl-1-octylthioacetate, and mixtures thereof.

In one embodiment, the blocked mercaptosilane has the general Formula 4:

(R¹⁶O)_{d}R¹⁷_{(3-d)}-Si-Z-S-C(=O)-R¹⁸ Formula 4

where: R¹⁶ is selected from the group consisting of a hydrogen atom, linear or branched C₁-C₁₈ alkyl groups, C₃-C₈ cycloalkyl groups, and C₆-C₁₀ aryl groups; R¹⁷ is selected from the group consisting of linear or branched C₁-C₁₈ alkyl groups, C₃-C₈ cycloalkyl groups, and C₆-C₁₀ aryl groups; R¹⁸ is selected from the group consisting of a hydrogen atom, linear or branched C₁-C₁₈ alkyl groups, C₃-C₈ cycloalkyl groups, C₆-C₁₀ aryl groups, and linear or branched C₂-C₈ alkoxyalkyl groups; Z is a C₁-C₁₈ divalent bonding group; and d is an integer equal to 1, 2 or 3.

Such blocked mercapto organosilane coupling agents are disclosed, for example, in U.S. Pub. No. 20200325312 A1. Other blocked mercapto organosilane coupling agents are disclosed, for example, in U.S. Pat. No. 6,608,125 B2 and U.S. Pub. No. 2006/0041063 A1.

One example of a suitable blocked mercapto silane is 3-octanoylthio-1-propyltriethoxysilane, which is commercially available as NXT^{™} silane from Momentive Performance Materials Inc., Albany, N.Y. Such a coupling agent also provides the tire with improved wet performance.

Examples of polysulfide-containing organosilane coupling agents which may be present in lesser amounts include those containing groups such as alkyl, alkoxy, amino, vinyl, epoxy, and combinations thereof (e.g., disulfide-based alkoxy-containing organosilane coupling agents, tetrasulfide-based alkoxy-containing organosilane coupling agents).

Exemplary polysulfide organosilane coupling agents that contain alkoxy groups include bis(trialkoxysilylorgano)polysulfides, such as bis(trialkoxysilylorgano)disulfides and bis(trialkoxysilylorgano)tetrasulfides. Exemplary bis-(3-triethoxysilylpropyl) polysulfides may have an average of from 2 to 2.6 or from 3.5 to 4, connecting sulfur atoms in the polysulfidic bridge. One exemplary Bis-(3-triethoxysilylpropyl)disulfide has an average of 2.15 connecting sulfur atoms in the polysulfidic bridge, and is obtained as Si266^{™} from Evonik Industries. Bis(3-triethoxysilylpropyl)tetrasulfide (TESPT), supported on a carbon black carrier, is available as Si69^{®} from Evonik.

Such bis(trialkoxysilylorgano)polysulfide(s) may be present in the rubber composition in an amount of at least 0.5 phf, or up to 3 phf, or at least 0.3 phr, or up to 4 phr.

In one embodiment, such bis(trialkoxysilylorgano)polysulfide(s) are used only in the productive mixing step, i.e., during or after addition of the sulfur curing agent.

In one embodiment, one or more of the organosilane coupling agent(s) is added to the rubber composition in the form of a pre-treated silica. The pre-treated silica can be one that has been pre-surface treated with an organosilane prior to being added to the rubber composition. The use of a pre-treated silica can allow for two ingredients (i.e., silica and a silica coupling agent) to be added as one ingredient, which generally tends to make rubber compounding easier and may also reduce the amount of organosilane coupling agent needed. In another embodiment, the organosilane coupling agent(s) is/are separately added to the rubber composition.

### e) Resin Component

The resin component of the rubber composition includes at least 40 phr of a hydrocarbon traction resin, at least 5 phr of a tackifier resin, and optionally a rosin. The tackifier resin may include a substituted or unsubstituted phenol aldehyde resin, such as a phenol formaldehyde resin. Other resins may also be present in the resin component. In one embodiment, one or more of the resins is at least partially hydrogenated.

Unlike oils, which are liquids at room temperature (20-25°C), resins are generally solid or highly viscous at room temperature. For example, the resin may have a Tg of at least 30°C, or least 40°C, or at least 50°C, or up to 70°C, or up to 60°C, as determined using DSC according to ASTM D6604.

A ratio by weight of the traction resin to the tackifier resin may be at least 3:1, or at least 4:1, or at least 5:1, or up to 20:1, or up to 10:1, or up to 8:1, or up to 7:1.

### i) Hydrocarbon Resin

The exemplary rubber composition includes at least 40 phr, or at least 50 phr, or at least 55 phr, or up to 80 phr, or up to 75 phr, or up to 70 phr of a hydrocarbon traction resin, such as 63 ± 5 phr. The exemplary traction resin helps to improve/maintain the wet traction of a tire, which can be estimated from percentage rebound or tan delta values, e.g., at about 0°C.

The hydrocarbon resin may have a softening point of at least 70° C, or at least 80° C, or up to 120°C, or up to 110°C, as determined according to ASTM E28. The Tg is generally lower than its softening point, and the lower the Tg the lower the softening point. The hydrocarbon resin may have a Tg of at least 45°C, or at least 50°C, or up to 65°C, or up to 60°C, as determined using DSC according to ASTM D6604.

Petroleum-based resins suitable as resins include both aromatic and nonaromatic resins. Examples of aromatic resins include aromatic homopolymer resins and aromatic copolymer resins. An aromatic copolymer resin refers to a hydrocarbon resin which includes a combination of one or more aromatic monomers in combination with one or more other (non-aromatic) monomers, with the majority by weight of all monomers generally being aromatic. Aromatic resins may have a Mw of at least 500 grams/mole, or at least 650 grams/mole, and/or up to 2000 grams/mole, or up to 1000 grams/mole.

The hydrocarbon resin may be selected from C5 resins, including polydicyclopentadiene (DCPD) and hydrogenated equivalents thereof such as HC5 resins and hydrogenated DCPD resins (HDCPD); C9 resins, and hydrogenated equivalents thereof such as HC9 resins; and copolymers and mixtures thereof, such as C5/C9 resins, including DCPD/C9 resins, HDCPD/C9 resins, and mixtures thereof. In the abbreviations, H indicates that the resin is at least partially hydrogenated, and C5 and C9 indicate the number of carbon atoms, prior to any dimerization or functionalization, in the monomers from which the resins are formed. Other hydrocarbon traction resins which may be used include terpene-phenol resins, terpene resins, terpene-styrene resins, styrene/alpha-methylstyrene resins, and coumarone-indene resins.

C5 resins are derived from aliphatic monomers containing an average of five carbon atoms, such as one or more of cyclopentene, 1,3-pentadiene (e.g., cis or trans), 2-methyl-2-butene, cyclopentadiene, dicyclopentadiene (a dimer of cyclopentadiene), and diolefins such as isoprene and piperylene. C9 resins are derived from aromatic olefins containing an average of 9 carbon atoms, may include one or more of vinyl toluene, methylstyrenes, such as alpha-methylstyrene, beta-methylstyrene, meta-methylstyrene, para-methylstyrene, indene, methylindene, styrene, para(tert-butyl)styrene, methoxystyrene, chlorostyrene, hydroxystyrene, vinylmesitylene, divinylbenzene, vinylnaphthalene, xylene, alkyl-substituted derivatives thereof, and mixtures thereof.

Resins may be formed from mixtures of the C5 and C9 monomers mentioned above (C5/C9 copolymer resins). In one embodiment, the C5 fraction used in the C5/C9 resin is predominantly dicyclopentadiene (DCPD) and the C9 fraction is predominantly composed of styrenic compounds, such as styrene, alpha-methylstyrene, and beta-methylstyrene.

In one embodiment, the hydrocarbon traction resin is functionalized and/or partially hydrogenated.

The C5/C9 resin, e.g., DCPD/C9 or HDCPD/C9 resin, may have an aromatic hydrogen content, as determined by 1H NMR, of at least 5 mole %, or at least 8 mole %, or up to 25 mole %, or up to 20 mole % or up to 15 mole %, with the balance being aliphatic hydrogen content. The C5/C9 resin may have an aromatic monomer content of at least 5 wt.%, or at least 8 wt.%, or up to 12 wt.%, or 10± 2 wt.%.

Exemplary C5/C9 resins may have a glass transition temperature Tg of greater than 40°C, or at least 50°C, or up to 70°C, such as 55 ± 5 °C, as determined using DSC according to ASTM D6604. The C5/C9 resin may have a softening point of at least 80°C, or at least 90°C, or up to 120°C, or up to 110°C, as determined by ASTM E28 (ring and ball softening point). The C5/C9 resin may have melt viscosity, at 160 °C, of from 300 to 800 centipoise (cPs), or from 350 to 650 cPs, or from 375 to 615 cPs, or from 475 to 600 cPs, as measured by a Brookfield viscometer with a type "J" spindle, in accordance with ASTM D6267.

The C5/C9 resin may have a weight average molecular weight (Mw) of at least 500 g/mole, or at least 600 g/mole, or at least 700 g/mole, or up to 1000 g/mole, or up to 900 g/mole, or up to 800 g/mole, as determined by gel permeation chromatography (GPC). The C5/C9 resin may have a number average molecular weight (Mn) of at least 350 g/mole, or at least 400 g/mole, or at least 450 g/mole, or up to 600 g/mole, as determined by gel permeation chromatography (GPC). In one embodiment, the C5/C9 resin has a polydispersion index ("PDI", PDI=Mw/Mn) of 4 or less, e.g., from 1.3:1 to 3.1.

In one embodiment, the traction resin is or includes a hydrogenated dicyclopentadiene (HDCPD)/C9 resin.

In one embodiment, the C5/C9 resin is substantially free (e.g., contains no more than 5 wt.%, or no more than 2 wt.%) of isoprene.

In one embodiment, the C5/C9 resin is substantially free (e.g., contains no more than 5 wt.%, or no more than 2 wt.%) of amylene.

The C5/C9 resin may include less than 15% indenic components, or less than 10 wt.%, or less than 5 wt.%, or less than 2 wt.% of indenic components. Indenic components include indene and derivatives of indene.

One suitable HDCPD/C9 resin is available as OPPERA^{™} PR 383 from Exxonmobil. This resin has an aromatic hydrogen content of about 10 mole %, an aliphatic hydrogen content of about 89 mole %; a softening point (ring and ball method), of about 103°C; a Tg of 55°C; an Mn of 480 g/mol; and an Mw of 770 g/mol. Another suitable C5/C9 copolymer resin is available as OPPERA^{™} PR 373 from ExxonMobil, which has a Tg of 47 °C. Other exemplary OPPERA^{™} hydrocarbon resins available from ExxonMobil Chemical Company, include OPPERA^{™} PR 100A, OPPERA^{™} PR 100N, OPPERA^{™} PR 120, OPPERA^{™} PR140, and OPPERA ^{™} PR395.

Additional hydrocarbon-based traction resins are described in U.S. Pat. No. 11,214,667 B2. U.S. Pub. No. 20200056018 A1 describes modified hydrocarbon thermoplastic resins for use in rubber compositions.

### ii) Tackifier Resin

The tackifier resin may be present in the rubber composition in an amount of at least 5 phr, or at least 7 phr, or up to 15 phr, or up to 12 phr, such as 10 ± 2 phr.

Exemplary tackifier resins include substituted and unsubstituted phenol aldehyde resins, such as phenol aldehyde resins, alkylphenol aldehyde resins, and mixtures thereof. These are condensation resins obtained by reacting phenol or a substituted phenol, such as an alkyl phenol, with an aldehyde, such as formaldehyde, acetaldehyde, or furfural, in the presence of acid or alkali catalysts. Examples of alkylphenols of the alkylphenol resin include cresol, xylenol, t-butylphenol, octylphenol, and nonylphenol.

Exemplary substituted and unsubstituted phenol aldehyde resins, such as alkylphenol resins, may have a softening point (ring and ball method) of at least 80°C, or up to 160°C, or up to 120°C.

The substituted or unsubstituted phenol aldehyde resin(s), e. g., alkylphenol resin, may be present in the rubber composition in an amount of at least 5 phr, or at least 7 phr, or up to 15 phr, or up to 12 phr, such as 10 ± 2 phr.

One suitable alkylphenol formaldehyde resin with a softening point (ring and ball method) of about 90°C, is available as SP-1068^{™} from SI Group.

Other tackifier resins include alkylphenol-alkyne condensation resins obtained by reaction of alkylphenols with alkynes such as acetylene; and modified alkylphenol resins obtained by modification of the foregoing resins with compounds such as cashew oil, tall oil, linseed oil, various animal or vegetable oils, unsaturated fatty acids, rosin, alkylbenzene resins, aniline, or melamine.

### iii) Other Resins

Other resins suited to use in the rubber composition, referred to herein generally as "rosin", are derived from naturally-occurring rosins and derivatives thereof, including, for example, gum rosin, wood rosin, and tall oil rosin. Gum rosin, wood rosin, and tall oil rosin have similar compositions, although the amount of components of the rosins may vary. Such resins may be dimerized, polymerized or disproportionated. Such resins may be in the form of esters of rosin acids and polyols such as pentaerythritol or glycol. In one embodiment, the tackifier resin is or includes a modified gum rosin.

The rosin (i.e., resin derived from naturally-occurring rosin and/or derivatives thereof) may be present in the rubber composition in an amount of 0 to 5 phr, or at least 1 phr, or up to 3 phr, or up to 2 phr. In one embodiment, no rosin is used.

Other example resins which may be used in the rubber composition, in addition to the exemplary traction resin and tackifying resin, include unreactive phenol formaldehyde, resorcinol, hexamethylene tetramine, and benzoxazine resins which, where present, may be used in a total amount of 1 to 5 phr, or up to 3 phr.

### f) Liquid Plasticizer

The exemplary rubber composition may include one or more liquid plasticizers.

These are processing aids which are liquid at room temperature (i.e., liquid at 25°C and above) and as such are distinguished from hydrocarbon resins, which are generally solid at room temperature. The liquid plasticizer may have a Tg that is below 0°C, generally well below, such as less than -30°C, or less than -40°C, or less than -50°C, such as a Tg of 0°C to -100°C.

Suitable liquid plasticizers include both oils (e.g., petroleum oils as well as plant-sourced oils) and other non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). Petroleum based oils may include aromatic oils, naphthenic oils, low polycyclic aromatic (PCA) oils, such as MES, TDAE, and SRAE, and mixtures thereof. Plant oils may include oils harvested from vegetables, nuts, seeds, and mixtures thereof, such as triglycerides. Some representative examples of vegetable oils that can be used include soybean oil, sunflower oil, canola (rapeseed) oil, corn oil, coconut oil, cottonseed oil, olive oil, palm oil, peanut oil, and safflower oil. In one embodiment, the vegetable oil includes or consists of sunflower oil.

Liquid plasticizers may be used in the rubber composition at from 0 to 10 phr, or at least 0.5 phr, or at least 1 phr, or at least 2 phr, or at least 4 phr, or up to 8 phr, or up to 7 phr, such a 6 ± 2 phr.

### g) Wax

The rubber composition may include one or more waxes, e.g., selected from paraffin wax, microcrystalline wax, and mixtures thereof which may be of the type described in The Vanderbilt Rubber Handbook (1978), pp. 346 and 347. Such waxes can serve as antiozonants.

The wax, where used, may be present at 1 to 5 phr, or up to 3 phr.

Other processing aids may also be used in the rubber composition. For example, a compound of fatty acid and amino acid derivatives, is available from Schill & Seilacher as Struktol^{®}, such as Struktol^{®} HT257. Such compounds may be used in the rubber composition at 1 to 5 phr and are beneficial at high silica loadings to reduce silica agglomeration.

### h) Cure Package

The cure package includes i) a sulfur-based curing (vulcanizing) agent, ii) zinc oxide, iii) a cure accelerator, and optionally, one or more of an organic cure activator and a cure inhibitor. The cure package may be used in the rubber composition at 0.5 to 20 phr, or at least 5 phr, or up to 12 phr.

### i) sulfur-based curing agent

Examples of suitable sulfur-based curing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur-based curing agents may be used in an amount of from 0.1 to 10 phr, such as at least 0.4 phr, or at least 1 phr, or up 5 phr, or up to 2 phr (expressed as the amount of sulfur).

### ii) Cure Accelerators, Cure Activators, Free Radical initiators, and Inhibitors

Cure accelerators and activators act as catalysts for the vulcanization agent.

Cure activators are additives which are used to support vulcanization. Cure activators include both inorganic and organic cure activators. Zinc oxide is the most widely used inorganic cure activator and may be present at 1 phr to 10 phr, e.g., at least 1.5 phr, or at least 2 phr, or up to 7 phr, or up to 5 phr, or up to 4 phr.

Organic cure activators include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The total amount of organic cure activator(s), such as a mixture of fatty acids, may be from 0.1 to 6 phr, such as at least 0.5 phr, or at least 1 phr, or up to 4 phr, or up to 3 phr.

Cure accelerators are used to control the time and/or temperature required for vulcanization and to improve the properties of the vulcanizate. In one embodiment, a single accelerator system may be used, i.e., primary accelerator. A primary accelerator may be used in amounts ranging from 0.5 to 5 phr. In another embodiment, combinations of two or more accelerators may be used. The secondary accelerator is generally used in smaller amounts, in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide, such as N-cyclohexyl benzothiazole-2-sulfenamide (CBS) or N-tert-butyl-2-benzothiazole-sulfenamide (TBBS). If a second accelerator is used, the secondary accelerator may be a guanidine such as N,N'-diphenyl guanidine (DPG), a dithiocarbamate or a thiuram compound, although a second sulfenamide accelerator may be used.

Examples of thiazole cure accelerators include 2-mercaptobenzothiazole, 2,2'-dithiobis(benzothiazole) (MBTS).

Cure accelerators having a fast cure initiation time, typically less than 3 minutes, are referred to as ultra-accelerators. Example ultra-accelerators which may be used alone or in combination with other accelerators include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc dibenzyl dithiocarbamate (ZBED), zinc dibenzyldithiocarbamate (ZBEC), and mixtures thereof.

The total amount of the cure accelerator(s) may be from 0.1 to 10 phr, or at least 0.5 phr, or at least 2 phr, or at least 4 phr, or up to 8 phr.

Free radical initiators, which may be used in some embodiments, are sometimes known as redox initiators, and include combinations of chelated iron salts, sodium formaldehyde sulfoxylate, and organic hydroperoxides. Representative organic hydroperoxides include cumene hydroperoxide, p-menthane hydroperoxide, and tertiary butyl hydroperoxide. The free radical initiator may be used in combination with, or as an alternative to, a sulfur-based vulcanizing agent. The amount of free radical initiator, where used, may be 0.1 to 4 phr, or 0.5 to 2 phr. In other embodiments, free radical initiators are absent from the rubber composition.

Cure inhibitors are used to control the vulcanization process and generally retard or inhibit vulcanization until the desired time and/or temperature is reached. Example cure inhibitors include cyclohexylthiophthalimide. The amount of cure inhibitor, if used, may be 0.1 to 3 phr, or 0.5 to 2 phr. In one embodiment, no cure inhibitor is used.

The rubber composition may further include other components, such as colorants, antioxidants, antidegradants, antiozonants and peptizing agents.

Exemplary amounts of antioxidants, antidegradants, antiozonants (other than waxes serving as such) are from 0.1 to 5 phr, such as at least 0.3 phr, or up to 2 phr. Representative antioxidants include aryl p-phenylene diamines, such as diphenyl-p-phenylenediamine and alkyl aryl p-phenylene diamine, such as N-(1,3 dimethyl butyl)-N'-phenyl-p-phenylene diamine, and others, such as, for example, those disclosed in The Vanderbilt Rubber Handbook (1978), pages 344 through 346.

### B Preparation of the Rubber Composition

In another embodiment, a method of preparing a vulcanizable rubber composition includes combining the components described above to form the vulcanizable rubber composition, e.g., in two or more mixing steps.

In another embodiment, a method of forming a tread of a pneumatic tire includes combining the components described above to form a vulcanizable rubber composition and curing the vulcanizable rubber composition to form the tread.

Rubber compositions may be prepared by mixing the vulcanizable elastomers, silica, and other rubber compounding ingredients, not including the curing agent, in at least one sequential mixing stage with at least one mechanical mixer, usually referred to as a "non-productive" mixing stage, or stage(s), to an elevated temperature under high shear rubber mixing conditions, followed by a final "productive" mixing stage, in which a sulfur-based cure package, such as a sulfur-based curing agent and cure accelerator(s), is added to the mixture and mixed at a lower mixing temperature to avoid unnecessarily pre-curing the rubber mixture during the productive mixing stage. The ingredients may be mixed in the non-productive mixing stage(s) to a temperature of 130°C to 200°C, e.g., about 160°C, which is maintained for 1-2 minutes. Once the cure package is added (or at least the curing agent), the subsequent productive mixing step may be conducted at a temperature below the vulcanization (cure) temperature and/or for a short time, in order to avoid unwanted pre-cure of the rubber composition, e.g., no more than 120°C, such as at least 40°C, or at least 60°C, e.g., for 1-2 minutes at a temperature of 110-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill or sheeted out by a roller die, and allowed to cool to below 40°C after each mixing step.

When the cure package is thoroughly mixed, the rubber composition may be molded or otherwise formed into the shape of a green component of a tire, such as a tire tread. The temperature of the green component may be raised to effect cure. Curing of the pneumatic tire or a part thereof may be carried out at a temperature of from 120°C to 200°C, e.g., at least 140°C, or up to 180°C, or about 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

The use of high loading of silica filler may optionally necessitate a separate re-mill stage for separate addition of a portion or all of such filler. This stage often is performed at temperatures similar to, although often slightly lower than, those employed in the other productive mixing stages, e.g., ramping from 90°C to 150°C.

In another embodiment, a tire is provided, the tire having a tread which is formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as a bus or truck, or an automobile, or a tire for an off-road vehicle, airplane or the like.

The rubber composition is not limited to use in tires but may find application in rubber gloves, surgical instruments, and the like.

### Example Rubber Compositions

Table 1 illustrates exemplary rubber compositions in accordance with aspects of the exemplary embodiment.

**Table 1: Example Rubber Compositions**

| Component | Example 1 (phr) | Example 2 (phr) |
|---|---|---|
| Functionalized SSBR, with low styrene content (no more than 10 % by weight) | 60 - 100 | 70 - 85 |
| Polybutadiene | 0 - 40 | 15 - 30 |
| Silica | 100 - 180 | 130 - 170 |
| Carbon black | 0 - 5 | 0 - 1 |
| Blocked mercapto organosilane coupling agent | 6 - 18 | 8 - 15 |
| Traction resin, e.g., (HDCPD)/C9 resin | 40 - 80 | 50 - 70 |
| Substituted or unsubstituted phenol aldehyde tackifier resin, e.g., an alkylphenol formaldehyde resin | 5 - 15 | 8 - 12 |
| Processing oil, e.g., vegetable oil | 0 - 15 | 3 - 6 |
| Wax | 1 - 5 | 1 - 3 |
| Sulfur-based curing agent | 0.5 - 10 | 1 - 5 |
| Zinc oxide | 1 - 7 | 2 - 4 |
| Fatty acid activator | 0.1 - 6 | 1 - 4 |
| Accelerators | 0.1 - 10 | 2 - 8 |
| Antioxidants and antiozonants | 0.1 - 5 | 0.3 - 2 |

The use of the exemplary rubber composition in tires, such as in tire treads, may result in a tire having improved or desirable tread properties. These improved or desirable properties may include improved wet performance, without a noticeable loss in snow performance.

Without intending to limit the scope of the exemplary embodiment, the following examples illustrate preparation of an exemplary rubber composition and properties thereof.

### EXAMPLES

Rubber compositions A-G are formulated using the ingredients listed in Table 2. All compositions use a mixture of a low Tg, low styrene SSBR and PBD as the elastomers, with examples E to G using a slightly lower ratio of the SSBR to PBD than Examples A to D.

Example A is the control for B. Example B is a negative example for which only one element-formaldehyde-phenol tackifying resin-of the inventive combination is shown, thus demonstrating poorer RR & Snow indicators.

Example C is the same as Control A but uses slightly higher processing aid. Example C is also used as a reference for Example F. Example D is a modified C with increased silica & silane and serves as reference both for Examples E & F.

Example E is a negative example only featuring one element (blocked mercapto-silane) of the inventive combination (tackifying resin + blocked-mercapto silane) and which only leads to an improved RR indicator. Example F features the inventive combination (tackifying resin + blocked mercapto-silane), which leads to improved Wet & RR indicators at maintained Snow indicators. Example G features the inventive combination and leads to improved Wet & RR indicators at maintained Snow indicators versus the reference Example D.

The rubber compositions are prepared as follows: In a first non-productive step (NP1), all ingredients, except for the sulfur, zinc oxide, accelerators, antidegradant / antioxidant, and tetrasulfide coupling agent are combined in a lab-scale mixer and mixed until the temperature reaches about 160°C for 1-2 minutes. The mixture is dropped from the mixer and allowed to cool. A further non-productive mixing step (NP2) is performed to ensure thorough mixing of the ingredients. Thereafter, in a productive mixing step (PR), the remaining ingredients are added and the mixing continues until the temperature reaches about 115°C. The vulcanizable composition is then cured at about 170°C and formed into strips suitable for testing.

**Table 2: Ingredients of Rubber Compositions (in phr)**

| **Ingredient** | **Contro Ex. A** | **Ex. B** | **Ex. C** | **Ex. D** | **Ex. E** | **Ex. F** | **Ex. G** |
|---|---|---|---|---|---|---|---|
| Non-Productive Stage | | | | | | | |
| SSBR¹ | 78 | 78 | 78 | 78 | 75 | 75 | 75 |
| Extender oil for SSBR | 3 | 3 | 3 | 3 | 3 | 3 | 3 |
| Polybutadiene ² | 22 | 22 | 22 | 22 | 25 | 25 | 25 |
| Precipitated Silica ³ | 150 | 150 | 150 | 165 | 165 | 150 | 165 |
| Blocked mercapto organosilane coupling agent ⁴ | 0 | 0 | 0 | 0 | 13.2 | 12 | 13.2 |
| Disulfide organosilane coupling agent ⁵ | 9.4 | 9.4 | 9.4 | 10.3 | 0 | 0 | 0 |
| Traction Resin ⁶ | 66 | 60 | 66 | 70 | 66 | 53 | 60 |
| Tackifier Resin ⁷ | 0 | 9 | 0 | 0 | 0 | 10 | 10 |
| Tackifier Resin ⁸ | 3 | 0 | 3 | 3 | 3 | 0 | 0 |
| Antiozonant wax | 3 | 3 | 3 | 3 | 3 | 3 | 3 |
| Antiozonant/antioxidant | 3 | 3 | 3 | 3 | 3 | 3 | 3 |
| Liquid plasticizer ⁹ | 6 | 6 | 6 | 14 | 6 | 0 | 5 |
| Processing aid - reduces silica agglomeration | 1.5 | 1.5 | 3 | 3 | 3 | 3 | 3 |
| Fatty acid activator | 2 | 2 | 2 | 2 | 2 | 2 | 2 |

| Productive Stage | | | | | | | |
|---|---|---|---|---|---|---|---|
| Antidegradant/ antioxidant | Equal | | | | | | |
| Zinc Oxide | Equal | | | | | | |
| Sulfur and sulfur donor | Equal | | | | | | |
| Mixture of accelerators | 5.9 | 5.9 | 5.9 | 6.5 | 6.5 | 5.9 | 6.4 |
| Specific gravity | 1.26 | 1.26 | 1.26 | 1.26 | 1.27 | 1.26 | 1.27 |

| | | | | | | | |
|---|---|---|---|---|---|---|---|
| ¹ Solution polymerized, Li-catalyzed styrene butadiene rubber; 5 wt.% styrene; aminosiloxane multi-functionalized; 11 wt.% vinyl in polymer; 3.8 wt.% oil extended (reported separately); Mooney viscosity (ML1+4 at 100°C) of 90; Tg of -85°C; obtained as M0511 from LG Chemicals. ² Solution polymerized, relatively high cis-1,4 polybutadiene stabilized with a non-staining antioxidant; produced using a stereospecific neodymium catalyst which controls molecular weight distribution and provides a highly linear polymer weight distribution and provides a highly linear polymer; Mooney viscosity (ML1+4 at 100°C) of 55; Tg of -106°C; onset Tg of -110°C; cis-1,4 butadiene content, 96-97 wt.%; volatiles, 0.5 wt.% maximum; specific gravity 0.91; obtained as BUDENE^{®} 1223, from The Goodyear Tire and Rubber Company. ³ Precipitated silica having a BET nitrogen surface area of about 125 m²/g; CTAB surface area of about 115 m²/g; obtained as Hi-SiI^{™} 315 G-D from PPG. ⁴ 3-Octoanoylthio-1-propyltriethoxysilane, obtained as NXT^{™} silane, from Momentive Performance Materials. ⁵ Bis-(3-triethoxysilylpropyl)disulfide with an average of 2.15 connecting sulfur atoms in the polysulfidic bridge, obtained as Si266^{™} from Evonik Industries. ⁶ Hydrogenated dicyclopentadiene (HDCPD)/C9 resin; 10 wt.% aromatic; 89 wt.% aliphatic; softening point (ring and ball method), about 103°C; Tg, 55°C; Mn 480 g/mol; Mw 770 g/mol; obtained as Oppera^{™} PR 383 from ExxonMobil. ⁷ Alkylphenol formaldehyde tackifier resin with a softening point (ring and ball method) of about 90°C; obtained as SP-1068^{™} from SI Group. ⁸ WW grade Gum Rosin (colophony); softening point (ring and ball method) of about 85°C; obtained from A.V. Pound & Co. Ltd. ⁹ Vegetable oil. | | | | | | | |

The rubber compositions are formed into appropriately-sized samples and subjected to various tests. Table 3 illustrates the test results predictive of snow performance, rolling resistance, and wet performance.

**TABLE 3: Performance Prediction Tests**

| **Test** | **Control Ex. A** | **Ex. B** | **Ex. C** | **Ex. D** | **Ex. E** | **Ex. F** | **Ex. G** |
|---|---|---|---|---|---|---|---|
| Rebound at 0°C (%) ^{A} | 14.1 | 14.0 | 16.0 | 14.7 | 14.7 | 15.2 | 13.5 |
| Rebound at 100°C (%) ^{B} | 52.0 | 48.3 | 54.6 | 51.6 | 55.9 | 55.7 | 54.2 |
| G' at -30°C (MPa) ^{C} | 27.9 | 31.7 | 19.5 | 21.3 | 21.1 | 19.4 | 21.5 |

| | | | | | | | |
|---|---|---|---|---|---|---|---|
| ^{A} Rebound at 0°C is determined using a Zwick rebound tester on samples that have been cured at 170°C for 10 minutes. Lower results are considered to be indicators of better wet traction performance. ^{B} Rebound at 100°C is determined using a Zwick rebound tester on samples that have been cured at 170°C for 10 minutes. Higher results are considered to be indicators of better (lower) rolling resistance. ^{C} The storage modulus, G' at -30°C is determined with a Dynamic Mechanical Analyzer provided by Metravib^{™} Instruments, using a frequency of 7.8 Hertz and a strain value of 1.5% on samples that have been cured at 170°C for 10 minutes and is an indicator of performance in snow (lower is better). | | | | | | | |

The results suggest that in Examples F and G, the combination of the blocked mercapto organosilane coupling agent with hydrocarbon traction resin and an alkylphenol formaldehyde tackifier resin at 10 phr in highly silica filled Winter/All Season tread formulations containing a relatively low Tg functionalized SSBR polymer leads to improved wet traction performance (as indicated by Rebound at 0°C) and lower rolling resistance (as indicated by Rebound at 100°C) at maintained snow performance (as indicated by G' at -30°C) when compared with similar compositions. For example, Example F can be compared with Example C, which uses a disulfide organosilane coupling agent coupler and no alkylphenol formaldehyde tackifier resin, or Example G compared with Example D.

Other comparisons can be made, For example, it can be seen that replacing the rosin tackifier resin and part of the hydrocarbon traction resin with 9 phr of alkylphenol formaldehyde tackifier resin at a 150 phr silica level (Example B) leads to worse rolling resistance and snow indicators when compared to Example A. The combination of a blocked mercapto organosilane coupling agent with alkylphenol formaldehyde tackifier resin and 150 phr silica (Example F) leads to improved wet and rolling resistance indicators at a maintained snow indicator level when compared to Example C. Using a blocked mercapto organosilane coupling agent in place of a disulfide organosilane coupling agent at 165 phr silica (Example E) leads to an improved rolling resistance indicator at maintained wet and snow indicators when compared to Example D. The combination of blocked mercapto organosilane coupling agent with alkylphenol formaldehyde tackifier resin at 165 phr silica (Example G) also leads to improved wet and rolling resistance indicators at a maintained snow indicator as compared to Example D.

## Claims

1. A vulcanizable rubber composition comprising:
80 to 100 parts per hundred rubber (phr) of a polydiene component comprising 60 to 100 phr of a solution-polymerized styrene butadiene rubber with a styrene content of 2 to 10 wt.% and a Tg of -95°C to -75°C, and 0 to 40 phr of a polybutadiene rubber;
at least 100 phr of silica filler;
at least 6 parts by weight per hundred parts of the silica filler (phf) of a blocked mercapto organosilane coupling agent;
at least 40 phr of a hydrocarbon resin;
at least of 5 phr of a substituted or unsubstituted phenol aldehyde resin; and
a cure package.

2. The vulcanizable rubber composition of claim 1, wherein the solution-polymerized styrene butadiene rubber is present at 70 to 90 phr and/or wherein the polybutadiene rubber is present at 10 to 30 phr.

3. The vulcanizable rubber composition of claim 1 or 2, wherein a ratio by weight of the solution-polymerized styrene butadiene rubber to the polybutadiene rubber is from 2.5:1 to 5:1.

4. The vulcanizable rubber composition at least one of the previous claims, wherein the solution-polymerized styrene butadiene rubber has a styrene content of no more than 8 wt.%.

5. The vulcanizable rubber composition at least one of the previous claims, wherein the solution-polymerized styrene butadiene rubber is functionalized with an aminosilane, the aminosilane preferably comprising an alkoxyaminosilane.

6. The vulcanizable rubber composition of at least one of the previous claims, wherein the silica filler is at least 140 phr; and/or wherein the blocked mercapto organosilane coupling agent is at least 10 phr.

7. The vulcanizable rubber composition of at least one of the previous claims, wherein coupling agents other than the blocked mercapto organosilane coupling agent total no more than 2 phr.

8. The vulcanizable rubber composition of at least one of the previous claims, wherein the hydrocarbon resin is at least 50 phr and/or wherein the substituted or unsubstituted phenol aldehyde resin is present in an amount of at least 8 phr.

9. The vulcanizable rubber composition of at least one of the previous claims, wherein the hydrocarbon resin comprises a hydrogenated dicyclopentadiene/C9 resin.

10. The vulcanizable rubber composition of at least one of the previous claims, wherein the substituted or unsubstituted phenol aldehyde resin comprises an alkylphenol formaldehyde resin.

11. The vulcanizable rubber composition of at least one of the previous claims, further comprising at least one of a liquid plasticizer and a wax; and/or comprising no more than 5 phr of carbon black.

12. The vulcanizable rubber composition of at least one of the previous claims, comprising:
70 - 85 phr of the solution-polymerized styrene butadiene rubber with a styrene content of 2 to 10 wt.% and a cis-1,4-butadiene content of less than 45;
15 - 30 phr of the polybutadiene rubber;
140 - 170 phr of the silica filler;
8-15 phr of the blocked mercapto organosilane coupling agent;
50 - 70 phr of the hydrocarbon resin;
8-12 phr of the substituted or unsubstituted phenol aldehyde resin; and
the cure package comprising a sulfur-based curing agent, zinc oxide, and a cure accelerator.

13. A tire component, preferably a tire tread, formed from or comprising the rubber composition of at least one of the previous claims as a vulcanized rubber composition.

14. A tire comprising the tire component of claim 13.

15. A method of forming a tire tread, the method comprising:
mixing together 80 to 100 parts per hundred rubber (phr) of a polydiene component comprising 60 to 100 phr of a solution-polymerized styrene butadiene rubber with a styrene content of 2 to 10 wt.% and a Tg of -95°C to -75°C, and 0 to 40 phr of a polybutadiene rubber; at least 100 phr of silica; at least 6 parts by weight per hundred parts of the silica (phf) of a blocked mercapto organosilane coupling agent; at least 40 phr of a hydrocarbon resin; at least of 5 phr of a substituted or unsubstituted phenol aldehyde resin; and a cure package comprising a sulfur-based curing agent, zinc oxide, and a cure accelerator to form a vulcanizable rubber composition; and curing the vulcanizable rubber composition to form the tire tread.
